# EUROPÄISCHE PATENTANMELDUNG

(11) **EP 1 932 700 A2**
(43) Veröffentlichungstag der Anmeldung: **18.06.2008**
(21) Anmeldenummer: 07015858.9
(22) Anmeldetag: 11.08.2007
(51) Int. Cl.: B60J 1/20

(54) **Dreiecksfensterrollo für Kraftfahrzeuge**

(30) Priorität: 11.12.2006 DE 102006058598
(71) Anmelder: BOS GmbH & Co. KG, 73760 Ostfildern (DE)
(72) Erfinder: Hansen, Melf, 75053 Gondelsheim (DE)
(74) Vertreter: Rüger, Barthelt & Abel Patentanwälte

(57) **Zusammenfassung**

Ein Fensterrollo (22) für das Dreiecksfenster einer hinteren Seitentür weist eine Führungsschiene (24) auf, die über praktisch die gesamte Unterkante gerade verläuft. In der Nähe der Wickelwelle (23) ist entweder eine Tasche (50) vorhanden oder die Führungsschiene (24) geht dort mit einem kurzen Übergangsbogen (33) in einen schräg verlaufenden Abschnitt (34) über. Der durch die Führungsschiene laufende Gleitkörper (39) des Schlittens (25) wird entsprechend gedreht, um den Verbindungsarm (41) des Schlittens mit der Rollobahn (20) parallel zu der Fensterstrebe (16) auszurichten.

## Beschreibung

Das hintere Seitenfenster von PKWs ist durch eine Fensterstrebe in einen etwa dreieckförmigen Bereich und einen viereckförmigen Bereich aufgeteilt. Die Abschattung des viereckförmigen Bereiches mit Hilfe eines Rollos bereitet keine wesentlichen Probleme. Anders sehen die Verhältnisse bei dem dreieckförmigen Bereich aus.

Unterhalb des dreieckförmigen Bereiches ist in der Tür eine Aussparung vorhanden, die das in der Karosserie vorhandene Radhaus berücksichtigt. Damit sind die Platzverhältnisse innerhalb des Türkörpers unterhalb des dreieckförmigen Bereiches sehr eingeschränkt und es ist in der Regel nicht möglich, die Führungsschiene für das Dreieckfensterrollo weit genug in Richtung auf die Spitze des dreieckförmigen Bereiches zu verlängern. Die Führungsschiene muss ein Stück weit davor enden. Damit muss der Mitnehmer, der die Spitze der Rollobahn mit dem Schlitten in der Führungsschiene verbindet, entweder beweglich sein oder im Verlauf der Ausfahrbewegung zusammen mit dem Schlitten eine Schwenkbewegung vollführen. In jedem Falle muss im eingefahrenen Zustand der Mitnehmer, der die Kupplung zwischen der Rollobahn und dem Schlitten unterhalb der Fensterunterkante bewirkt, bei eingefahrenem Rollo parallel zur Fensterstrebe stehen, damit er möglichst wenig störend in Erscheinung tritt.

Zum Erzwingen der Schwenkbewegung ist es aus dem Stand der Technik bekannt, zwei im Winkel zueinander verlaufende Führungsschienen einzusetzen, deren Abstand sich nach hinten, d.h. in Richtung auf die Spitze des dreieckförmigen Fensters verringert. Der Führungsschlitten läuft mit einem Ende in der einen Führungsnut und mit dem anderen Ende in der anderen Führungsnut. Da sich die beiden Nuten aneinander annähern, vollführt der Schlitten zum Ende des Fensters hin die gewünschte Schwenkbewegung.

Der Platzbedarf in vertikaler Richtung ist bei dieser Anordnung nicht unerheblich. Der Aufwand für zwei Führungsschienen, in denen der Schlitten laufen soll, ist ebenfalls beträchtlich.

Aus der EP 1 676 735 A2 ist ein Seitenfensterrollo bekannt, bei dem lediglich eine Führungsschiene unterhalb der Fensterunterkante verwendet wird. Die Führungsschiene zeigt über die gesamte Länge einen gekrümmten Verlauf, der etwa parallel zu der Oberkante des kleinen Fensters liegt derart, dass beide Krümmungsradien etwa denselben Mittelpunkt zeigen. Dadurch entsteht in der Nähe der Hinterkante des Fensters eine verhältnismäßig tiefe Tasche, denn dort ist die Führungsschiene gegenüber der Fensterunterkante sehr weit zurückgewichen. Tiefe Taschen, die nach oben offen sind, sind im Fahrzeug äußerst unerwünscht. In sie können leicht Teile hineinfallen, die nicht oder nur äußerst schwer wieder zu entfernen sind. Dies gilt insbesondere für den hinteren Bereich des Kraftfahrzeugs, in dem für gewöhnlich die Kinder mitfahren.

Ausgehend hiervon ist es Aufgabe der Erfindung ein Fensterrollo für den hinteren Fensterabschnitt von hinteren Seitenfenstern zu schaffen, der diese Nachteile vermeidet.

Diese Aufgabe wird erfindungsgemäß mit einem Fensterrollo mit den Merkmalen des Anspruches 1 oder 2 gelöst.

Wenn hier von einem dreieckförmigen Fensterabschnitt die Rede ist, sollen damit auch Fenster bezeichnet werden, deren Höhenestreckung sich zur Hinterkante sehr stark vermindert und die unter Umständen nicht in einer ausgerundeten Spitze, sondern in einer schrägen geraden Kante auslaufen. Bei solchen Fenstern ist gedanklich die sonst vorhandene abgerundete Spitze abgeschnitten. Im weitesten Sinne haben jedoch auch diese Fenster eine angenähert dreieckförmige Gestalt, obwohl sie bei puristischer Betrachtung eher trapezförmig sind, wobei die von der Unterkante abliegende Kante bogenförmig gekrümmt oder geneigt verläuft.

Das neue Fensterrollo für den hinteren, etwa dreieckförmigen Seitenfensterabschnitt weist eine Wickelwelle auf, die bei der Fensterstrebe drehbar gelagert ist. An der Wickelwelle ist mit einer Kante eine Rollobahn befestigt, deren Zuschnitt dem Zuschnitt des hinteren Fensterabschnittes entspricht.

Die Führungsschiene verläuft unmittelbar unterhalb der Fensterunterkante. In ihr läuft ein Schlitten, der über einen Arm mit der Spitze der Rollobahn verbunden ist. Damit die gewünschte Schwenkbewegung des Mitnehmers erreicht wird, folgt die Führungsschiene in einem an die Fensterstrebe angrenzenden Bereich einem geraden aber schräg nach unten geneigten Verlauf. Während der Bewegung des Schlittens längs der Führungsschiene in Richtung auf die Fensterstrebe, läuft somit der Arm zunächst exakt parallel zu der Unterkante. Seine Längsachse bleibt zunächst schräg geneigt in Richtung auf das hintere Ende des Fensters. Erst in der Nähe der Fensterstrebe vollführt der Arm eine schwenkbewegung, die ihn aus der schrägen Lage in eine Lage bringt, in der seine Längserstreckung etwa parallel zu der Fensterstrebe liegt.

Es wird so unterhalb der Fensterunterkante eine lange und tiefe Tasche vermieden, in der sich größere Gegenstände sammeln können. Die durch das Wegtauchen der Führungsschiene entstehende Tasche hat bei der erfindungsgemäßen Lösung nur eine kurze Erstreckung, gemessen in Richtung parallel zu Unterkante des Fensters. Die Wahrscheinlichkeit, dass sich darin Gegenstände sammeln können, ist entsprechend klein.

Gemäß der anderen erfindungsgemäßen Lösung läuft die Führungsschiene im Wesentlichen über die gesamte Strecke gerade durch. In der Nähe der Fensterstrebe enthält sie eine nach unten zeigende Öffnung, in die das der Fensterstrebe benachbarte Ende des Schlittens quasi hineinfällt, während das andere Ende in der Führungsschiene bleibt. Hierdurch entsteht die gewünschte Schwenkbewegung, wiederum unmittelbar in der Nähe der Fensterstrebe.

Zu der Antriebseinrichtung kann ein Federmotor gehören, der die Wickelwelle unmittelbar antreibt.

Die Wickelwelle kann zylindrisch oder konisch sein. Eine zylindrische Wickelwelle ist von Vorteil, wenn die Fensterunterkante rechtwinklig zu der Fensterstrebe verläuft. Hingegen ist eine konische Wickelwelle vorteilhaft, wenn die Fensterunterkante und die Fensterstrebe einen von 90° abweichenden Winkel miteinander einschließen.

Zweckmäßigerweise hat der erste gerade Abschnitt eine Länge, die mehr als 60%, vorzugsweise mehr als 80%, der Gesamtlänge der Fensterunterkante ausmacht. Damit erstreckt sich über den größten Teil der Fensterunterkante die Führungsschiene in unmittelbarer Nähe.

Damit ein Klemmen des Schlittens ausgeschlossen ist, kann sich der Schlitten zweckmäßigerweise aus einem Mittelstück und zwei Endstücken zusammensetzen, wobei der Querschnitt des Mittelstücks kleiner ist als der Querschnitt der Endstücke.

Die Endstücke sind untereinander vorteilhafterweise im Wesentlichen gleich.

Eine Verschwenkung der Endstücke in den Führungsschienen kann erleichtert werden, wenn wenigstens eines von einer gekrümmten Seitenflächen begrenzt ist, deren Krümmungsachse rechtwinklig zu der Laufachse des Schlittens ausgerichtet ist, d.h. senkrecht auf einer durch de Fensterscheibe definierten Ebene steht.

Reproduzierbare Antriebsverhältnisse werden erreicht, wenn das linienförmige Betätigungsglied eine Verzahnung trägt. Das linienförmige Betätigungsglied kann auch eine Rundumverzahnung aufweisen.

Je nach Einbauverhältnissen kann das linienförmige Betätigungsglied biegeelastisch sein.

Die Antriebseinrichtung kann ferner einen Getriebemotor umfassen, dessen Ausgangszahnrad eine Zahnung aufweist, die mit der Zahnung des linienförmigen Betätigungsglieds zusammenpasst.

Je nach Ausgestaltung kann die Führungsschiene lediglich eine Nutenkammer aufweisen. In dieser Nutenkammer können das Antriebsglied und der Schlitten laufen.

Je nach Platz- und Antriebsverhältnissen kann es von Vorteil sein, wenn die Führungsschiene über einen Abschnitt ihrer Länge eine weitere Führungsnut enthält, die sich im Querschnitt aus einer Nutenkammer und einem Nutenschlitz zusammensetzt, wobei der Nutenschlitz in die Nutenkammer der ersten Führungsnut von der Seite her einmündet. Das Antriebsglied kann in der zweiten Nutenkammer laufen. Dadurch ist es möglich, die eine Nutenkammer an den Querschnitt des Schlittens und die andere Nutenkammer an das Antriebsglied anzupassen, um auch bei Antriebsgliedern mit kleinem Querschnitt eine gute ausknicksichere Führung zu erhalten.

Je nach Platzverhältnissen können die beiden Nutenkammern, bezogen auf die normale Einbaulage, über- oder nebeneinander liegen.

Um die Schwenkbewegung des Schlittens zu erhalten, kann der Nutenschlitz der ersten Führungsnut sich nach oben öffnen, während im Wandbereich der Nutenkammer eine Öffnung enthalten ist, die dem Nutenschlitz gegenüber liegt. Die Länge dieser Öffnung kann, gemessen in Richtung parallel zum Bewegungsweg des Schlittens, kürzer sein als der Schlitten lang ist.

Die Öffnung kann Teil einer Tasche sein, womit die Öffnung nach unten zu verschlossen bleibt.

Wenn die Tiefe der Tasche größer ist als es der Verkippung des Schlittens in der Ruhelage neben der Wickelwelle entspricht derart, dass der Schwenkhub des Schlittens durch die Öffnung oder dass die Tasche nicht begrenzt ist, wird die Schwenkbewegung ausschließlich durch die Bewegung der Rollobahn gesteuert, was dazu beiträgt, dass Montagetoleranzen automatisch ausgeglichen werden.

Wenn in der Tasche eine Feder sitzt, die den Schlitten entgegen der Kippbewegung abstützt, kann eine weitgehende Klapperfreiheit sichergestellt werden.

Der Antrieb des Schlittens wird besonders zuverlässig, wenn der Schlitten mit dem Antriebsglied nicht nur drucksondern auch zugfest gekuppelt ist.

Damit die Schwenkbewegung nicht behindert wird, ist der Schlitten mit dem Antriebsglied mit einem Gelenk gekuppelt. Dadurch ist der Schlitten in der Lage, gegenüber dem Antriebsglied eine Schwenkbewegung zu vollführen, ohne dass von dem Antriebsglied auf den Schlitten eine Schwenkkraft ausgeübt wird.

Jeglicher Querzug in der Rollobahn kann vermieden werden, wenn der Arm an der Rollobahn begrenzt verschiebbar angebracht ist. Die durch die Schwenkbewegung hervorgerufene virtuelle Verkürzung des Arms wird durch die bewegliche Anlenkung ausgeglichen. Zwangskräfte werden vermieden, die sonst von dem Arm auf die Rollobahn ausgeübt werden könnten.

Im Übrigen sind Weiterbildungen der Erfindung Gegenstand von Unteransprüchen.

Die nachfolgende Figurenbeschreibung erläutert Aspekte zum Verständnis der Erfindung. Weitere, nicht beschriebene Details kann der Fachmann in der gewöhnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung der wesentlichen Details sind bestimmte Bereiche übertrieben groß dargestellt sind. Darüber hinaus sind die Zeichnungen vereinfacht und enthalten nicht jedes bei der praktischen Ausführung gegebenenfalls vorhandene Detail. Die Begriffe oben und unten beziehen sich auf die normale Einbaulage, es sei denn, es ist etwas anderes angegeben.
- Fig. 1: zeigt in einer perspektivischen aufgebrochenen Darstellung den Fondbereich eines PKW's, mit Blick auf die hintere rechte Seitentür;
- Fig. 2: zeigt eine Prinzipdarstellung für das Antriebs-und Führungskonzept des dreieckförmigen Seiten-rollos;
- Fig. 3: zeigt eine Prinzipdarstellung eines weiteren erfindungsgemäßen Antriebskonzeptes für das Dreiecksrollo;
- Fig. 4: zeigt einen Querschnitt durch die Führungsschiene des Ausführungsbeispiels nach Fig. 3, und
- Fig. 5: das Dreieckfensterrollo nach Fig. 3 in einer anderen Betriebsstellung..

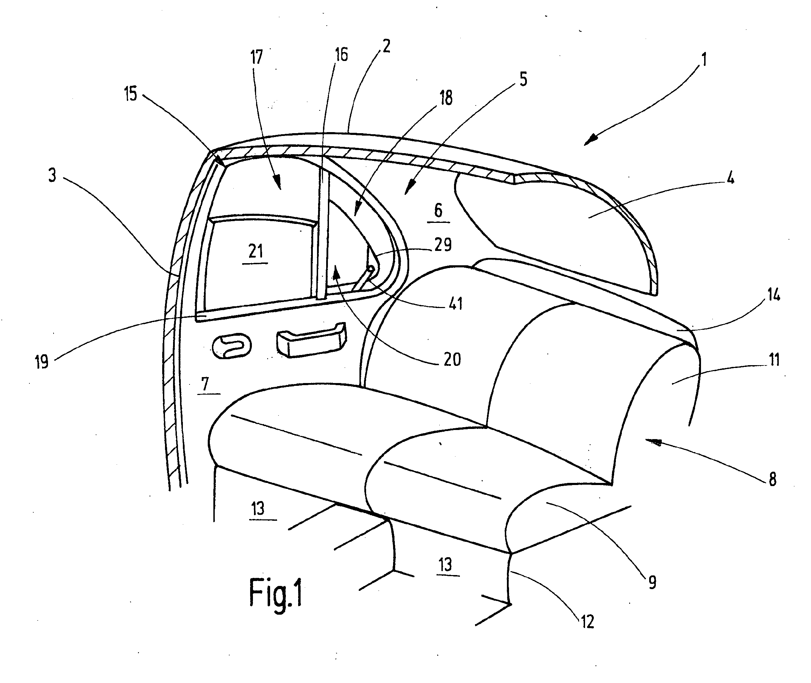

Fig. 1 stellt den aufgebrochenen, abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 6 ist an der B-Säule 3 eine hintere, rechte Seitentür 7 in bekannter Weise anscharniert.

Auf der Höhe der hinteren, rechten Seitentür 7 befindet sich eine Rücksatzbank 8, zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere, rechte Seitentür ist in der für Limousinen üblichen Weise mit einem Seitenfenster 15 versehen. Das Seitenfenster 15 wird durch eine etwa vertikal verlaufende Fensterstrebe 16 in ein im wesentlichen viereckiges Fensterfeld 17 sowie ein etwa dreieckiges Fensterfeld 18 aufgeteilt. Am unteren Ende werden die beiden Felder 17 und 18 von einer durchlaufenden geraden Fensterunterkante 19 begrenzt.

Die in dem Fensterfeld 17 vorhandene Scheibe ist in der bekannten Weise auf und ab zu bewegen, wozu sie unter anderem in der vertikalen Strebe 16 in bekannter Weise geführt ist. Die in dem dreieckigen Fensterfeld 18 vorhandene Scheibe ist starr eingesetzt.

Beide Fensterfelder 17 und 18 sind durch jeweils zugeordnete Rollobahnen 20 und 21 abzuschatten. Der Antriebsmechanismus für die beiden Rollobahnen 20 und 21 befindet sich in dem Innenraum der Tür 7 unterhalb der Fensterunterkante 19.

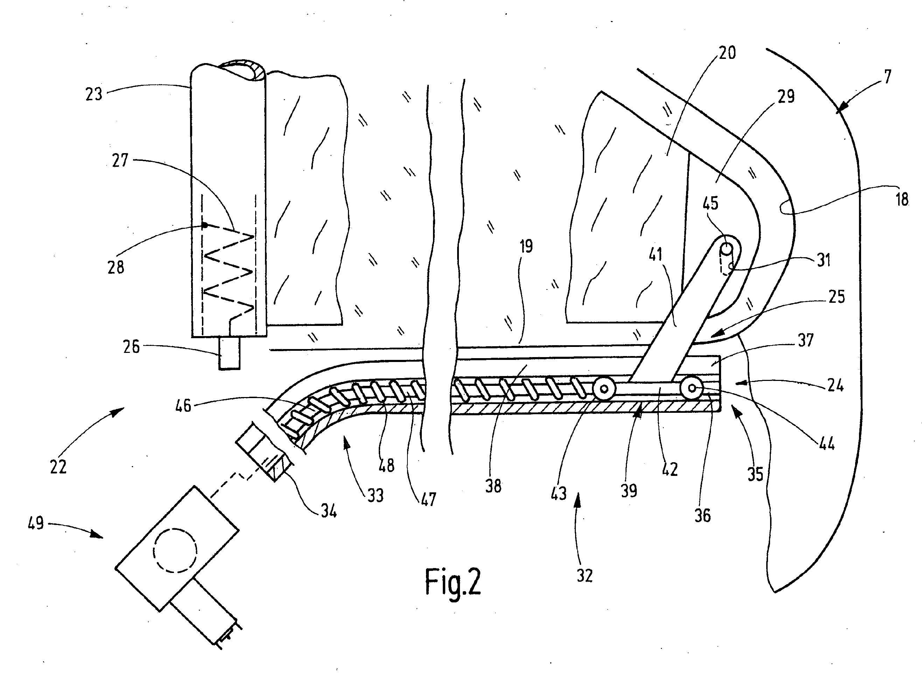

Wie Fig. 2 zeigt ist die Rollobahn 20 ist Teil eines Fensterrollos 22. Zu dem Fensterrollo 22 gehören eine Wickelwelle 23, eine Führungsschiene 24 sowie ein Schlitten 25. Die Wickelwelle 23 wird von einem zylindrischen Rohr gebildet, das bei der Fensterstrebe 16 in einem dort vorgesehenen Gehäuse drehbar gelagert ist. Die Achse der Wickelwelle 23 verläuft somit im Wesentlichen rechtwinklig zu der Fensterunterkante 19. Die obere Lagerung der Wickelwelle 23 ist nicht weiter gezeigt. Am unteren Ende weist sie einen Zapfen 26 auf, der drehfest in der Tür 7 verankert ist und auf dem sich die Wickelwelle 23 dreht. Im Inneren der Wickelwelle 23 befindet sich ein Federmotor in Gestalt einer Schraubenzugfeder 27, die bei 28 mit der Innenseite der Wickelwelle 23 verbunden ist und mit ihrem anderen Ende an dem Zapfen 26 festgelegt ist. Mit Hilfe des Federmotors 27 wird die Wickelwelle 23 mit einem solchen Drehsinne vorgespannt, das sie bestrebt ist die Rollobahn 20 aufzuwickeln.

Die Rollobahn 20 besteht aus einem weniger lichtdurchlässigen Bahnmaterial, beispielsweise einem Gewirke oder einer gelochten Folie. Ihr Zuschnitt entspricht etwa der Außenköntur des Fensterabschnittes 18, d.h. der Zuschnitt ist im Wesentlichen angenähert dreieckförmig.

Mit einer Kante ist die Rollobahn 20 an der Wickelwelle 23 festgelegt, während ihre von der Wickelwelle 23 abliegende Spitze mit einer Verstärkungsplatte 29 versehen ist. Die Verstärkungsplatte 29 enthält ein gestrichelt angedeutetes Langloch 31 mit einer vertikalen langen Achse. Der Zweck des Langlochs 31 ergibt sich aus der weiter unten gegebenen Funktionsbeschreibung.

Die Führungsschiene 24 setzt sich in ihrer Längserstreckung aus einem parallel zu der Unterkante verlaufenden Abschnitt 32, einem kurzen Übergansabschnitt 33 sowie einem sich daran anschließenden, wiederum geraden Abschnitt 34 zusammen. Sie hat einen über die Länge konstanten Querschnitt.

Die Befestigungsmittel zum Erhalten der Führungsschiene 24 sind aus Übersichtlichkeitsgründen nicht mit veranschaulicht. Dem Fachmann ist klar wie dies zu gestalten ist.

Wie die Figur erkennen lässt, erstreckt sich der gerade Abschnitt 32, ausgehend von dem hinteren Ende des Fensterabschnitts 18 bis fast zu der Wickelwelle 23, d.h. bis fast zu der Fensterstrebe 16. Der Übergansabschnitt 33 dessen Länge hier aus Darstellungsgründen deutlich übertrieben gezeigt ist, befindet sich, bezogen auf die Darstellung, knapp rechts von der Wickelwelle und erstreckt sich über eine Strecke, die weniger als 10% der Gesamtlänge des Abschnittes 32 ausmacht. Der Abschnitt 34 ist wiederum gerade und verläuft, nicht wie der Abschnitt 32 parallel zu der Unterkante 19, sondern im spitzen Winkel, d.h. er bewegt sich, ausgehend von dem Übergansabschnitt 33 von der Unterkante 19 weg.

Die Führungsschiene 24 enthält eine Führungsnut 35, die sich aus einer Nutenkammer 36 und einem Nutenschlitz 37 zusammensetzt. Der Querschnitt der Nutenkammer 36 ist etwa qudratisch. Der Querschnitt des Nutenschlitzes 27, von dem eine Seitenwand 38 zu sehen ist, ist flach rechteckig, wobei die lange Kante des Rechtecks, bezogen auf die Einbaulage vertikal ausgerichtet ist. Der Nutenschlitz 37 geht etwa von der Mitte der Nutenkammer 36 aus, d.h. beide liegen auf derselben vertikalen Symmetrieebene die parallel zur Zeichenebene verläuft. Die Nutenkammer 36 bildet einen ebenen Boden, der dem Nutenschlitz 37 gegenüberliegt.

Die Abmessungen des Nutenschlitzes 37 und der Nutenkammer 36 sind so gewählt, dass sich eine hinterschnittene Nut ergibt.

Der Schlitten 25 setzt sich aus einem Gleitkörper 39 und einem daran angeformten Arm 41 zusammen. Der Gleitkörper 39 weist ein flaches liegendes Mittelstück 42 und zwei Endstücke 43 und 44 auf, die integraler Bestandteil des Gleitkörpers 39 sind. Damit hat der Geleitköper 39 von der Seite gesehen die Gestalt einer Hantel. Der Arm 41 steht von dem Mittelstück 42 schräg nach oben.

Der Arm 41 geht von dem Mittelstück 42 einstückig aus, er hat die gezeigte flachkantige Gestalt und eine Dicke senkrecht zur Zeichenebene derart, dass er mit geringem Seitenspiel durch den Schlitz 37 hindurch passt um dort geführt zu werden. Am oberen Ende enthält er eine Bohrung für einen Verbindungsbolzen 45, beispielsweise in Gestalt eines losen Niets, durch den der Arm 41 mit der Verstärkungsplatte 29 im Bereich des Langloches 31 verbunden ist. Die Verbindung ist derart, dass der Arm 41 gegenüber der Verstärkungsplatte 29 schwenkbar und in dem Langloch 31 auf und ab bewegbar ist.

Die Endstücke 43 und 44 des Gleitkörpers 39 haben die Gestalt eines kurzen Zylinders, dessen Länge der Weite der Nutenkammer 36 entspricht. Ihr Durchmesser ist geringfügig kleiner als die Höhe der Nutenkammer 36, wodurch der Gleitkörper 39 in der Lage ist, klemmfrei durch den Führungsschienenabschnitt 33 zu laufen.

Innerhalb der Nutenkammer 36 ist ein linienförmiges Antriebsglied ausknicksicher geführt. Das linienförmige Antriebsglied 46 setzt sich aus einer zylindrischen Seele 47 und einer daran fest angebrachten Wendel 48 zusammen. Dadurch entsteht eine Art biegeelastische Zahnstange mit Schrägverzahnung, gebildet durch die Wendel 48.

Der Antrieb des Antriebsgliedes 46 erfolgt über einen Getriebemotor 49 in bekannter Weise, der auch dazu verwendet wird die Rollobahn 21 synchron mit der Rollobahn 20 zu bewegen.

Wie dargestellt, zeigt der Arm 41 in Richtung auf das Hinterende des Fensterabschnitts 18. Diese Ausrichtung ist erforderlich, weil bei der praktischen Ausführung die Führungsschiene 24 noch vor dem Hinterende, d.h. vor der Spitze des Fensterabschnittes 18 enden muss. Die Platzverhältnisse innerhalb der Tür 7 erzwingen eine entsprechende Verkürzung der Führungsschiene 24. Wie die Figur erkennen lässt, zeigt damit der Arm 41 quasi von der Wickelwelle 23 weg.

Die Funktionsweise des beschriebenen Fensterrollos 22 ist wie folgt:
Zur Erläuterung wird von der Position gemäß Fig. 2 ausgegangen. Der Schlitten 25 steht am Hinterende der Führungsschiene 24, d.h. das hintere oder rechte Endstück 44 befindet sich geradeeben noch in der Nutenkammer 36. In dieser Position befindet sich die Spitze der Rollobahn 20 mit der Verstärkungsplatte 29 in der Nachbarschaft des hinteren Randes des Fensterabschnitts 18. Das Langloch 31 ist so positioniert, dass sich die Rollobahn 20 auf dem Verbindungsbolzen 45 abstützen kann und parallel zu der geraden Unterkante 19 getragen wird. Der Federmotor 27 hält die Rollobahn 20 gespannt, denn der Schlitten 25 ist durch das Antriebsglied 46 mit Hilfe des selbsthaltenden Getriebemotors in der gezeigten Stellung blockiert.
Zum Einfahren der Rollobahn wird der Getriebemotor 49 in Gang gesetzt und zieht aufgrund einer formschlüssigen Kupplung zwischen dem Antriebsglied 46 und einem in dem Getriebemotor 49 enthaltenen Zahnrad das Antriebsglied 46 aus der Führungsschiene 24 zurück. Die getriebliche Kupplung zwischen dem Antriebsglied 46 und dem Getriebemotor 49 ist in zahlreichen Schutzrechtsanmeldungen der Anmelderin erläutert, so dass auf eine erneute Darstellung verzichtet werden kann.

Das Antriebsglied 46, das zug- und druckfest mit dem Gleitkörper 39 verbunden ist, zieht somit den Schlitten 25 in Richtung auf die Wickelwelle 23. In dem Maße, in dem der Schlitten 25 in Richtung auf die Wickelwelle 23 wandert, wird die Rollobahn aufgewickelt. Sobald das führende Endstück 43 in den Bereich der Übergangsstelle zwischen dem Abschnitt 32 und dem Abschnitt 34 gelangt, beginnt das Gleitstück 39 eine geringfügige Schwenkbewegung um eine auf der Zeichenebene und damit auch auf der Ebene des Fensters 18 senkrecht stehenden Achse auszuführen.

Am Schluss der Einfahrbewegung steht entweder nur das Endstück 43 oder beide Endstücke 43 und 44 in dem Abschnitt 34. Dieser Abschnitt hat einen solchen Winkel, dass am Schluss der Einfahrbewegung der Arm 41 parallel zu der Achse der Wickelwelle 23 ausgerichtet ist.

Der Zweck des Langlochs 31 besteht darin, die durch die Schwenkbewegung zustande kommende scheinbare Verkürzung des Arms 41 aufzunehmen, damit die Spitze der Rollobahn 20 nicht gewaltsam zur Unterkante 19 gezogen wird.

Am Ende der Einfahrbewegung steht somit der Arm 41 parallel zu Fensterstrebe 16 und ist praktisch nicht mehr zu erkennen.

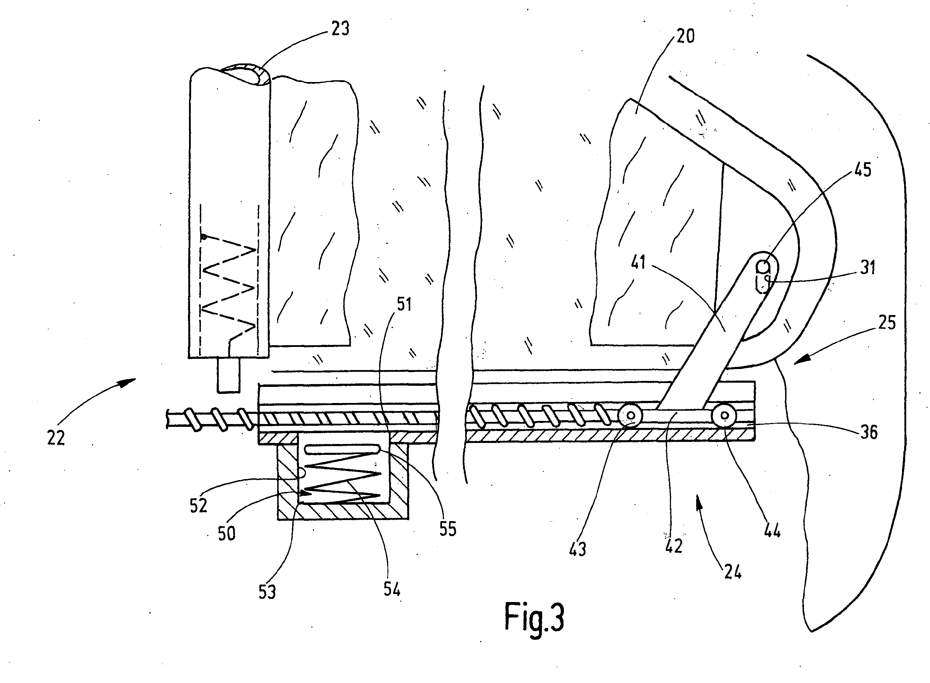

Fig. 3 zeigt ein weiteres Ausführungsbeispiel für das erfindungsgemäße Dreieckrollo 22. Die bereits in Verbindung mit Fig. 2 beschriebene Komponenten sind mit denselben Bezugszeichen versehen. Insbesondere stimmt die Ausführung nach Fig. 3 hinsichtlich der Ausbildung der Wickelwelle der Rollobahn des Fensters sowie des Schlittens weitgehend mit der Ausführungsform nach Fig. 2 überein.

Bei dem Ausführungsbeispiel nach Fig. 2 ist die Führungsschiene 24 durchgehend gerade. In der Nähe der Wickelwelle 23 enthält die Nutenkammer 36 eine nach unten führende Tasche 50, deren Breite senkrecht zur Zeichenebene der Breite der Nutenkammer 36 bzw. der Länge der Endstücke 43 und 44 entspricht. Die Tasche 51 geht mit einer oberen Kante 51 in den Boden der Nutenkammer 36 über. Zur Fensterstrebe 16 hin wird die Tasche 50 von einer Rückwand 52 und nach unten von einem Boden 53 begrenzt, auf dem eine kurze Schraubendruckfeder 54 steht, die an ihrem oberen freien Ende einen Stützteller 55 aufnimmt.

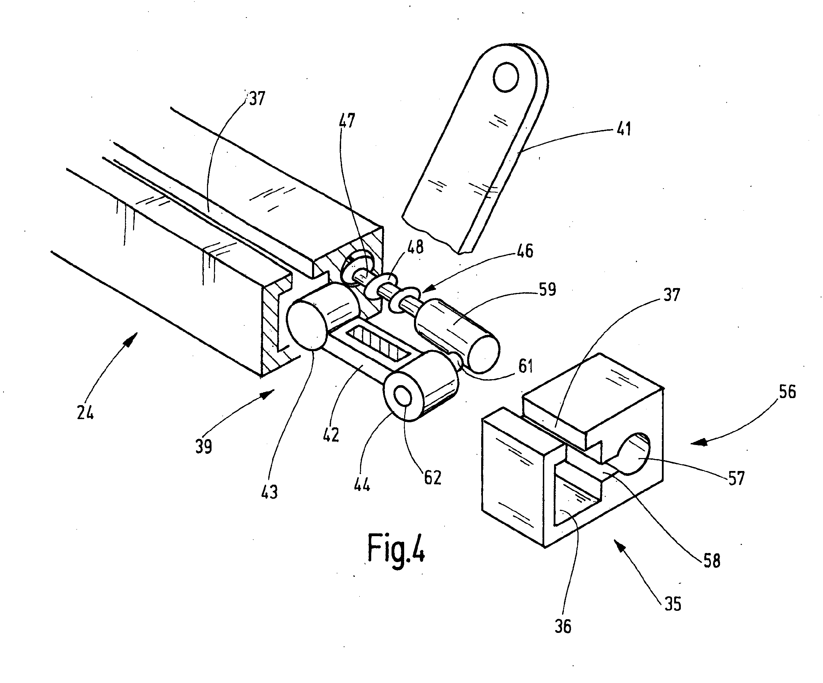

Der wesentliche Unterschied betrifft ansonsten die Ausgestaltung der Führungsschiene 24, deren Querschnitt sich aus Fig. 4 ergibt.

Wie zu erkennen ist, verläuft parallel zu der ersten Führungnut 35 in dem Grundkörper der Führungsschiene 24 eine zweite Führungsnut 56. Der Querschnitt der Führungsnut 56 setzt sich wiederum aus einer Nutenkammer 57 und einem Nutenschlitz 58 zusammen. Die Führungsnut 56 ist eine hinterschnittene Führungsnut. Die Nutenkammer 27 hat Kreisquerschnitt, während der Nutenschlitz 58 im Querschnitt rechteckig ist. Der Nutenschlitz 58 verbindet die Nutenkammer 57, wie gezeigt, mit der Nutenkammer 36, die hiermit quadratischem Querschnitt versehen ist.

Der Durchmesser der Nutenkammer 57 entspricht dem Au-βendurchmesser des Antriebsglieds 46, so dass dies mit sehr wenig Radialspiel in der Nutenkammer 57 ausknicksicher geführt ist.

Das Antriebsglied 56 ist zug- und druckfest mit einer Abschlusskappe 59 versehen, von der radial ein Verbindungsarm 61 ausgeht. Der Verbindungsarm 61 ist zylindrisch und führt mit geringem Spiel mit dem Nutenschlitz 58 hindurch. Er steckt in einer Bohrung 62 des hinteren Endstücks 44. Die Bohrung 62 liegt koaxial zu der zylindrischen Umfangsfläche des Endstücks 44. Der Gleitkörper 39 ist so um die durch den Verbindungsarm 61 definierte Achse drehbar.

Mittels der Abschlusskappe 49 ist der Verbindungsarm 61 zug- und druckfest mit dem Antriebsglied 46 verbunden. Der Arm 46 liegt wie gezeigt rechtwinklig zu der Längsachse des Antriebsgliedes 46, wenn dies durch die Nutenkammer 57 gleitet.

Der Antrieb des Antriebsgliedes 46, dessen Aufbau mit dem des Antriebsglieds 46 aus Fig. 2 übereinstimmt, geschieht in ähnlicher Weise, wie dies in Verbindung mit Fig. 2 erläutert ist, nämlich mittels des Getriebemotors 49.

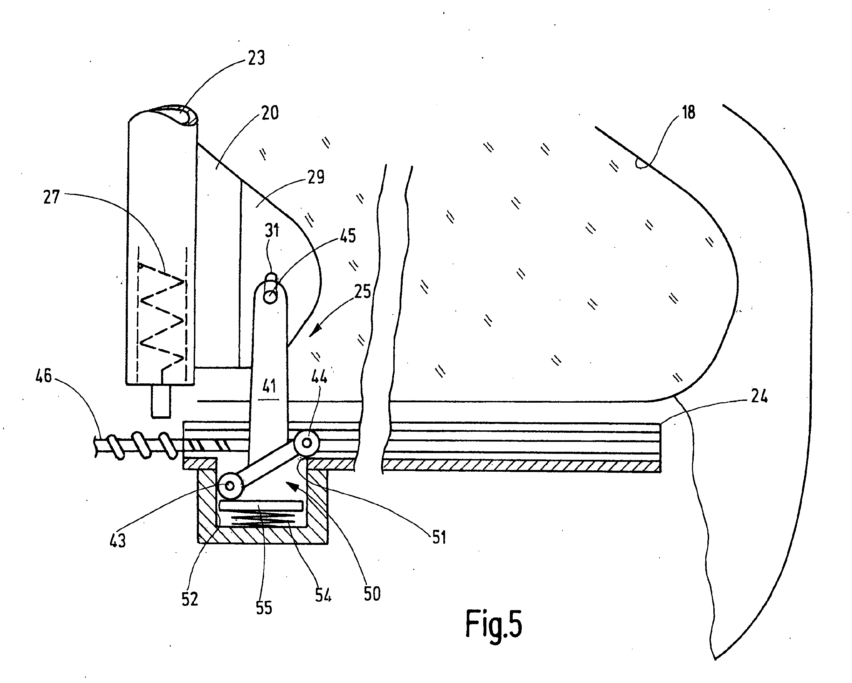

Zur Erläuterung der Funktion des Rollos 22 wird zusätzlich auf Fig. 5 Bezug genommen.

Die Ausgangsstellung zur Erläuterung der Funktion ist die ausgefahrene Stellung gemäß Fig. 3. Der Schlitten 25 steht wiederum am Ende des Fensterausschnittes 18, so dass, abgesehen von einem marginalen Spalt um die Rollobahn 20 der Fensterabschnitt 18 abgedeckt ist. Der Arm 41 steht über das Ende der Führungsschiene 24 nach hinten in Richtung Fahrzeugheck über, um diese Vollbeschattung zu erreichen. In der Position gemäß Fig. 3 wird der Schlitten 25 durch das linienförmige Antriebsglied 46 mit Hilfe des Getriebemotors 49 festgehalten. Dieser hat den Schlitten 25 gegen die Wirkung des Federmotors 27 in die gezeigte Endlage gedrückt.

Zum Einfahren der Rollobahn 20 wird der Getriebemotor 49 mit umgekehrter Drehrichtung in Gang gesetzt. Er zieht das Antriebsglied 46 aus der Führungsschiene 24 zurück. Wegen der Kopplung des Antriebsglieds 26 mit dem Gleitkörper 39 über den Verbindungsarm 61 läuft der gesamte Schlitten 25 bezogen auf Fig. 5 nach links. Gleichzeitig mit der Bewegung des Schlittens 25 wird die Rollobahn 20 kontinuierlich auf die Wickelwelle 23 unter der Wirkung des Federmotors 27 aufgewickelt. Während des gesamten Bewegungshubs bleibt sie gespannt.

In der Nähe der Fensterstrebe 16 passiert zunächst das Endstück 43, das in Richtung auf die Fahrzeugfront liegt, die Kante 51 der Tasche 50. Damit wird die an dem Schlitten 25 auftretende Vertikalkraft von dem Endstück 53 nicht mehr auf den Boden oder Unterseite der Nutenkammer 36 eingeleitet. Das Endstück 43 gelangt auf die Oberseite des Stütztellers 55, dessen Oberseite etwa um den halben Durchmesser des Endstücks 43 unter der Bodenfläche der Nutenkammer 36 steht. Der Gleitkörper 39 vollführt demzufolge eine entsprechende Drehbewegung, um eine auf der Zeichenebene senkrecht stehende Achse zusammen mit dem daran befindlichen Arm 41. Im Verlauf der weiteren Rückzugsbewegung des Antriebsgliedes 46 wird das Endstück 43 an der hinteren Wand 52 der Tasche 50 anstoßen. Da nunmehr die Bewegung des Gleitkörpers 39 in Richtung auf die Fensterstrebe 16 blockiert ist, wird sein Endstück 43 zunehmend in der Tasche 15 längs der Wand 52 nach unten wandern. In der Endstellung steht der Arm 41, wie gezeigt, etwa senkrecht, d.h. parallel zu der Wickelwelle 23. Das Endstück 44, an dem das Antriebsglied 46 angekuppelt ist, liegt nach wie vor in der Nutenkammer 36, während das Endstück 43 seine tiefste Stellung in der Tasche 50 angenommen hat.

Die Schwenkbewegung des Gleitstücks 39 wird außerdem durch die am freien Ende des Arms 41 wirkende Zugkraft, die durch die Rollobahn 20 ausgeübt wird, unterstützt.

Mit Hilfe der Druckfeder 54 wird die Klapperfreiheit des Schlittens 25 in der Tasche 50 gewährleistet.

Zum Ausfahren wird der Getriebemotor mit der entgegengesetzten Drehrichtung in Gang gesetzt. Hierdurch wird das Antriebsglied 56 in Richtung auf das hintere Ende des Fensterabschnitts 18 vorgeschoben. Der Gleitkörper 39 wird bei der Bewegung allmählich aus der Tasche 50 herausgehoben. Nach einem ausreichenden Fahrweg kommt das Endstück 43 zu der Kante 51 und wird dort auf den Boden der Nutenkammer 36 gehoben. Von da an wird der Gleitkörper 39 in der Nutenkammer 36 zwangsgeführt und kann keine Kippbewegung mehr vollführen.

Die Führungsschiene nach Fig. 4 kann auch bei dem Rollo nach Fig. 2 verwendet werden.

Ein Fensterrollo für das Dreiecksfenster einer hinteren Seitentür weist eine Führungsschiene auf, die über praktisch die gesamte Unterkante gerade verläuft. In der Nähe der Wickelwelle ist entweder eine Tasche vorhanden oder die Führungsschiene geht dort mit einem kurzen Übergangsbogen in einen schräg verlaufenden Abschnitt über. Der durch die Führungsschiene laufende Gleitkörper des Schlittens wird entsprechend gedreht, um den Verbindungsarm des Schlittens parallel zu der Fensterstrebe auszurichten.

## Patentansprüche

1. Fensterrollo (22) für dreieckförmige Seitenfensterabschnitte (18) von hinteren Seitenfenstern () bei Kraftfahrzeugen (), bei denen das Seitenfenster () durch eine etwa vertikal verlaufende Fensterstrebe (16) in einen viereckigen Bereich (17) und in den dreickförmigen Bereich (18) aufgeteilt ist, der ferner von einer Unterkante (19) und einer schräg verlaufenden Oberkante () begrenzt ist,
mit einer Wickelwelle (23), die bei der Fensterstrebe (16) drehbar gelagert ist,
mit einer Rollobahn (20), die mit einer Kante () an der Wickelwelle (23) befestigt ist und einen an die Gestalt des Fensters (18) angepassten Zuschnitt () mit einer Spitze (29) aufweist,
mit einer Führungsschiene (24), die in einem von der Fensterstrebe (16) abliegenden ersten Abschnitt (32) parallel zu der Fensterunterkante (19) verläuft und sich in einem zweiten daran anschließenden geraden Abschnitt (34), der der Fensterstrebe (16) benachbart ist, von der Fensterunterkante (19) entfernt, wobei die Führungsschiene (24) eine Führungsnut (35) enthält, deren Querschnitt sich aus einer Nutenkammer (36) und einem Nutenschlitz (37) zusammensetzt,
mit einem Schlitten (25), der in der Führungsschiene (24) geführt ist und mit der Spitze (29) der Rollobahn (20) verbinden ist,
mit einem linienförmigen Betätigungsglied (46), das in der Nutenkammer (36) läuft und mit dem Schlitten (25) zumindest in Druckrichtung gekuppelt ist, und
mit einer Antriebseinrichtung (27,49) für die Wickelwelle (23) und das Betätigungsglied (46).

2. Fensterrollo (22) für dreieckförmige Seitenfensterabschnitte (18) von hinteren Seitenfenstern () bei Kraftfahrzeugen (), bei denen das Seitenfenster () durch eine etwa vertikal verlaufende Fensterstrebe (16) in einen viereckigen Bereich (17) und in den dreickförmigen Bereich (18) aufgeteilt ist, der ferner von einer Unterkante (19) und einer schräg verlaufenden Oberkante () begrenzt ist,
mit einer Wickelwelle (23), die bei der Fensterstrebe (16) drehbar gelagert ist,
mit einer Rollobahn (20), die mit einer Kante () an der Wickelwelle (23) befestigt ist und einen an die Gestalt des Fensters (18) angepassten Zuschnitt () mit einer Spitze (29) aufweist,
mit einer Führungsschiene (24), die parallel zu der Fensterunterkante (19) verläuft und die eine Führungsnut (35) enthält, deren Querschnitt sich aus einer Nutenkammer (36) und einem Nutenschlitz (37) zusammensetzt,
mit einem Schlitten (25), der in der Führungsschiene (24) geführt ist und der mit der Spitze (29) der Rollobahn (20) verbunden ist,
mit einem linienförmigen Betätigungsglied (46), das in der Nutenkammer (36) läuft und mit dem Schlitten (24) zumindest in Druckrichtung gekuppelt ist, und
mit einer Antriebseinrichtung (23,49) für die Wickelwelle (23) und das Betätigungsglied (46),
wobei die Nutenkammer (36) in der Nähe der Fensterstrebe (16) in ihrer Wand () eine Öffnung (50) enthält, die dem Schlitten (25) eine Schwenkbewegung () um eine Achse () ermöglicht, die senkrecht auf der durch die Fensterscheibe () definierten Ebene steht.

3. Rollo nach Anspruch 1 oder 2, **dadurch gekennzeichnet, dass** die Antriebseinrichtung (23,49) einen Federmotor () aufweist, der der Wickelwelle (23) zugeordnet ist.

4. Rollo nach Anspruch 1 oder 2, **dadurch gekennzeichnet, dass** die Wickelwelle (23) eine zylindrische () oder leicht konische () Gestalt aufweist.

5. Rollo nach Anspruch 1 oder 2, **dadurch gekennzeichnet, dass** die Fensterstrebe (16) rechtwinklig zu der Fensterunterkante (19) verläuft und dass die Wickelwelle (23) zylindrisch ist.

6. Rollo nach Anspruch 1 oder 2, **dadurch gekennzeichnet, dass** der Winkel () den die Fensterunterkante (19) mit der Fensterstrebe (16) einschließt, kleiner 90° ist und das die Wickelwelle (23) eine konische Gestalt () aufweist.

7. Rollo nach Anspruch 1, **dadurch gekennzeichnet, dass** sich die Länge des ersten geraden Abschnitts (32) mehr als 60% der Gesamtlänge () der Fensterunterkante (19) des dreieckförmigen Fensterabschnitts (18) ausmacht.

8. Rollo nach Anspruch 1 oder 2, **dadurch gekennzeichnet, dass** zu dem Schlitten (25) ein Mittelstück (42) und zwei Endstücke (43,44) gehören, wobei das Mittelstück (42) gegenüber den Endstücken (43,44) nach oben zurückspringt.

9. Rollo nach Anspruch 8, **dadurch gekennzeichnet, dass** die Endstücke (43,44) untereinander gleich sind.

10. Rollo nach Anspruch 8, **dadurch gekennzeichnet, dass** das Endstück (43,44), von gekrümmten Seitenflächen () begrenzt ist, deren Krümmungsachse () rechtwinkelig zu der Laufachse des Schlittens (25) ausgerichtet ist.

11. Rollo nach Anspruch 1 oder 2, **dadurch gekennzeichnet, dass** das linienförmige Betätigungsglied (46) eine Verzahnung (48) trägt.

12. Rollo nach Anspruch 1 oder 2, **dadurch gekennzeichnet, dass** das linienförmige Betätigungsglied (46) eine Rundumverzahnung (48) trägt.

13. Rollo nach Anspruch 1 oder 2, **dadurch gekennzeichnet, dass** das linienförmige Betätigungsglied (46) biegeelastisch ist.

14. Rollo nach Anspruch 11 oder 12, **dadurch gekennzeichnet, dass** die Antriebseinrichtung (23,49) einen Getriebemotor () umfasst, dessen Ausgangszahnrad () eine Zahnung () aufweist, die mit der Zahnung () des linienförmigen Betätigungsglieds () zusammenpasst.

15. Rollo nach Anspruch 1 oder 2, **dadurch gekennzeichnet, dass** die Führungsschiene (24) lediglich eine Führungsnut (35) mit einer Führungskammer (36) aufweist.

16. Rollo nach Anspruch 15, **dadurch gekennzeichnet, dass** in der Nutenkammer (36) der Führungsschiene (25) das Antriebsglied (46) und der Schlitten (25) laufen.

17. Rollo nach Anspruch 1 oder 2, **dadurch gekennzeichnet, dass** die Führungsschiene (24) zumindest über einen Abschnitt ihrer Länge eine weitere Führungsnut (56) enthält, die sich im Querschnitt () aus einer Nutenkammer (57) und einem Nutenschlitz (58) zusammensetzt, wobei der Nutenschlitz (58) in die Nutenkammer (36) der ersten Führungsnut (35) von der Seite her einmündet, und dass in der Nutenkammer (57) der zweiten Führungsnut (56) das Antriebsglied (46) läuft.

18. Rollo nach Anspruch 17, **dadurch gekennzeichnet, dass** die beiden Nutenkammern (36,57), bezogen auf die normale Einbaulage (), nebeneinander liegen.

19. Rollo nach Anspruch 2, **dadurch gekennzeichnet, dass** sich der Nutenschlitz (37) der ersten Führungsnut () nach oben öffnet und dass der Wandbereich der Nutenkammer (36), der dem Nutenschlitz (37) gegenüber liegt, die Öffnung (50) enthält.

20. Rollo nach Anspruch 2, **dadurch gekennzeichnet, dass** die Länge der Öffnung (50), gemessen in Richtung parallel zum Bewegungsweg () des Schlittens (25), kürzer ist als der Schlitten (25) in der Führungsnut (35) lang ist.

21. Rollo nach Anspruch 2, **dadurch gekennzeichnet, dass** die Öffnung (50) Teil einer Tasche () ist.

22. Rollo nach Anspruch 2 oder 21, **dadurch gekennzeichnet, dass** die Tiefe der Tasche (50) größer ist als es der Verkippung des Schlittens (25) in der Ausgangslage () neben der Wickelwelle (23) entspricht derart, dass der Schwenkhub () des Schlittens (25) durch die Öffnung () oder das Tasche (50) nicht begrenzt ist.

23. Rollo nach Anspruch 2 oder 21, **dadurch gekennzeichnet, dass** in der Tasche (50) eine Feder (54) sitzt.

24. Rollo nach Anspruch 1 oder 2, **dadurch gekennzeichnet, dass** der Schlitten (25) mit dem Antriebsglied (46) zug- und druckfest gekuppelt ist.

25. Rollo nach Anspruch 1 oder 2, **dadurch gekennzeichnet, dass** der Schlitten (25) mit dem Antriebsglied (46) über eine Gelenk (61,62) gekuppelt ist.

26. Rollo nach Anspruch 1 oder 2, **dadurch gekennzeichnet, dass** die Spitze der Rollobahn (29) mit dem Schlitten (25) derart verbunden ist, dass die Spitze des Zuschnitts (29) in vertikaler Richtung begrenzt beweglich ist.

27. Rollo nach Anspruch 26, **dadurch gekennzeichnet, dass** der Schlitten (25) oder die Rollobahn (20) ein Langloch (31) enthält.
